# EUROPEAN PATENT APPLICATION

(11) **EP 4 407 759 A1**
(43) Date of publication of application: **31.07.2024**
(21) Application number: 23305098.8
(22) Date of filing: 26.01.2023
(51) Int. Cl.: H01M 50/103, H01M 50/119, H01M 50/15, H01M 50/159

(54) **CASING OF A BATTERY CELL**

(71) Applicant: Automotive Cells Company SE, 92300 Levallois Perret (FR)
(72) Inventor: CHOI, Hangjune, 33200 BORDEAUX (FR)
(74) Representative: Alatis

(57) **Abstract**

A casing (10) for a battery cell (100) has at least one plate (1) made of sheet metal closing an inner space (2) of the casing (10) for housing a stack of electrodes. The plate (1) has a length (L), a width (W) and a thickness (t) such that a slenderness ratio of the plate W/t is greater than 10. The plate (1) has at least one stamped bead (3) protruding towards the inner space (2) of the casing (10), which crosses a centerline (C) of the width (W) of the plate (1) and forms a recess (4) facing away from the inner space (2) of the casing (100), the recess (4) having an average width value Q measured at the centerline (C) of the width (W) of the plate (1), characterised in that the average width value Q is greater than 0.3t and less than 3t.

## Description

### TECHNICAL FIELD OF THE INVENTION

The present invention relates to a battery cell and, more particularly, to a prismatic battery cell, designed to be strong and stiff to ensure the battery is safe and durable throughout the designed life. It further relates to a module comprising such cells and to a battery system comprising at least one such module.

### BACKGROUND ART

A "battery" is defined as a plurality of electrochemical cells electrically connected to each other. According to a particular example of a battery, the plurality of electrochemical cells is arranged in the form of one or more assemblies, each assembly comprising a plurality of electrochemical cells electrically connected to each other and mechanically joined to each other by a joining system, such as joining plates.

An electrochemical cell comprises, in particular, a plurality of positive electrode layers connected to each other electrically in parallel and a plurality of negative electrode layers connected to each other electrically in parallel, and separators to ensure electrical insulations between every positive electrode layer and the negative electrode layer, known as a "stack". Said electrode stacks are placed inside a casing to delimit the cell mechanically. The bundled positive electrodes connects to the positive terminal of an electrochemical cell, and the bundled negative electrodes connects to the negative terminal. In other words, a prismatic battery cell usually comprises at least one stack of electrodes, two current collectors and two bundled plurality of flexible electrode tabs for positive electrodes and negative electrodes which connect these positive (cathodes) stack of electrodes to one of the current collectors and these negative (anodes) to the other current collector.

It is known that a plurality of electrochemical cells can be assembled, in series and/or in parallel, to make modules or electrical battery pack. Using an interconnection device to ensure electrical connections between the terminals of two neighbouring or adjacent electrochemical cells.

It is also known that, to assemble the electrically connected electrochemical cells mechanically, they are aligned on a flat support or rail and held at both compressed ends by fixed parallel plates, such an assembly being designated as a "module".

Designing a safe, reliable, and durable battery system is a necessary condition to ensure the healthy development of the new energy electric vehicle industry. The swelling force caused by the lithium-ion insertion/extraction to the electrodes not only does harm the safety of the battery system but also deteriorates the battery life. Moreover, the swelling force increases with the increase in the cycles of charge and discharge of the battery. In this work, the difference in the swelling force of batteries with different numbers of electrode sheets was studied. When the gap between the electrode and the casing is the same, the number of electrode sheets in the cell is higher, the swelling force is greater, and the capacity fading is faster. The swelling force is also stronger in the cell. Because of the stronger swelling force in the cell with more electrode sheets, each structural component needs to be stronger to ensure the battery is safe and durable throughout the designed life.

In a prismatic battery cell, the casing usually consists of a can, and a top cover closing said can. The top cover, in the state of art, is a flat metal plate of uniform thickness.

Said top cover, in the state of art, tends to deform significantly and change its shape in a bigger volume so that it causes distortion/deformation of the battery system structure, especially in case of a thicker prismatic cell.

### SUMMARY OF THE INVENTION

The present invention aims to remedy all, or part of, the disadvantages of the state of the art by providing, in particular, a battery in which the amount of outward deformation, and more particularly the bulging, of a battery cell due to its swelling is reduced without changing any design parameters of the cell.

Another aim of the invention is to reduce the amount of deformation of the top cover, specifically of a prismatic cell, without changing any design parameters of the cell.

According to a first aspect of the invention, there is provided with a casing for a battery cell having at least one plate made of sheet metal, closing an inner space of the casing for housing a stack of electrodes. Wherein the plate has a length having a value L, a width having a value W, and a thickness, having a value t, such that a slenderness ratio of the plate W/t is greater than 10. Wherein the plate has at least one stamped bead protruding towards the inner space of the casing, which crosses a centerline of the width of the plate and forms a recess facing away from the inner space of the casing, the recess having an average width value Q, measured at the centerline of the width of the plate, characterised in that the average width value Q is greater than 0.3t and less than 3t.

With such a combination of characteristics, by adding one or multiple stamped bead(s) and recess(es), in particular by adding beading structure during the metal stamping process, on at least one plate of the casing of a battery cell, the flexural stiffness of said plate will be increased when bending stress is applied. As the flexural stiffness increases due to the added recess structure and stamped bead, the outward deformation of the top cover part, caused by the internal gas pressure generated from the irreversible chemical reaction of the cell chemistry, should be reduced.

In a preferred embodiment, the width of the recess is constant.

In a preferred embodiment, the stamped bead has a height value P, greater than 0.3t and less than 3t.

In a preferred embodiment, the height of the stamped bead is constant.

In a preferred embodiment, the depth of the recess is constant.

In a preferred embodiment, said casing has a symmetric shape to the centre line of the width.

Preferably, the stamped bead and the recess extends rectilinearly.

In a preferred embodiment, the stamped bead and the recess extends parallel to a width direction of the plate.

Preferably, the casing has a prismatic shape for a prismatic battery cell.

In a preferred embodiment, at least the plate having the stamped bead, and, preferably, each plate of the casing has a rectangular shape.

In a preferred embodiment, the casing comprises a can, delimiting at least in part the inner space of the casing, said casing having a top cover to close the inner space of the casing together with the can, at least one plate having at least the stamped bead being the top cover.

In a preferred embodiment, at least the plate having the stamped bead, preferably each plate of the casing, has an average thickness greater than or equal to 1 mm, still preferably greater than or equal to 2 mm and/or less than or equal to 5 mm, and still preferably less than or equal to 4 mm.

In one embodiment, at least the plate having the stamped bead, preferably each plate of the casing, is delimited by a peripheral edge, the minimum distance between two points of this peripheral edge being greater than or equal to at least 10 times the value of an average thickness of the associated plate.

In one embodiment, the stamped bead is in a symmetric geometry to the centre line of the length and/or, preferably, to the centre line of the width of the plate.

In one embodiment, on the plate having at least one of said stamped beads
- any part of the bead and the recess resides within a predetermined value from a centre-line of a length of the plate, said predetermined value being less than or equal to 30%, preferably less than or equal to 20%, of the value of the length of the plate along a length direction, and/or
- any part of the bead and the recess resides within a predetermined value from a centre-line of a width of the plate, said predetermined value being less than or equal to 30%, preferably less than or equal to 20%, of the value of the width of the plate along a width direction.

According to another aspect of the invention, there is provided a battery cell comprising at least one stack of electrodes and two current collectors, one of the current collectors being connected to the cathodes of the stack of electrodes and the other current collector being connected to the anodes of the stack of electrodes preferably by means of flexible tabs, the battery cell having a casing, as described above, in which the stack of electrodes is housed.

According to another aspect of the invention, there is provided a battery module characterised in that it comprises a cage and a battery cells array held within said cage, the battery cells array having at least one, preferably all, of the battery cells, as described above.

According to another aspect of the invention, there is provided a battery pack, characterised in that it comprises at least one battery module, as described above.

The above-mentioned embodiments can be combined.

By virtue of the invention, by adding one or multiple stamped bead(s) and recess(es) during the stamping process of the plate, for example, of the top cover of a prismatic cell, the flexural stiffness of said plate will increase.

Moreover, the beads could be formed in a space which remains unutilized and, therefore, will not have any impact on the major design parameters of the battery cell. Such an invention has no impact on the cost or design parameters, and it reduces the swelling behavior of the battery cell leading to less deformation in its shape over its lifetime.

### BRIEF DESCRIPTION OF THE FIGURES

Other advantages and features of the present invention will become readily apparent from the following description of a specific embodiment of the invention. The specific embodiment is herein described as a non-limiting example only, represented in the accompanying drawings, in which:
- figure 1 is a schematic perspective view of a battery cell in one embodiment;
- figure 2 is a detail view of a section A-A of figure 1;
- figure 3 is a detail view of a section B-B of figure 1;
- figure 4 is a perspective view of a top cover of a battery cell according to an embodiment;
- figure 5 is a detail view of a section B-B of Figure 4;
- figure 6 is an isometric perspective view of a battery module according to an embodiment.

Corresponding reference numerals refer to the same or corresponding parts in each of the figures.

In the description and claims, for the sake of clarity, the terms longitudinal, transverse and vertical are adopted with reference to the **X, Y,** and **Z** trihedrons shown in the figures.

### DETAILED DESCRIPTION OF PREFERRED EMBODIMENTS

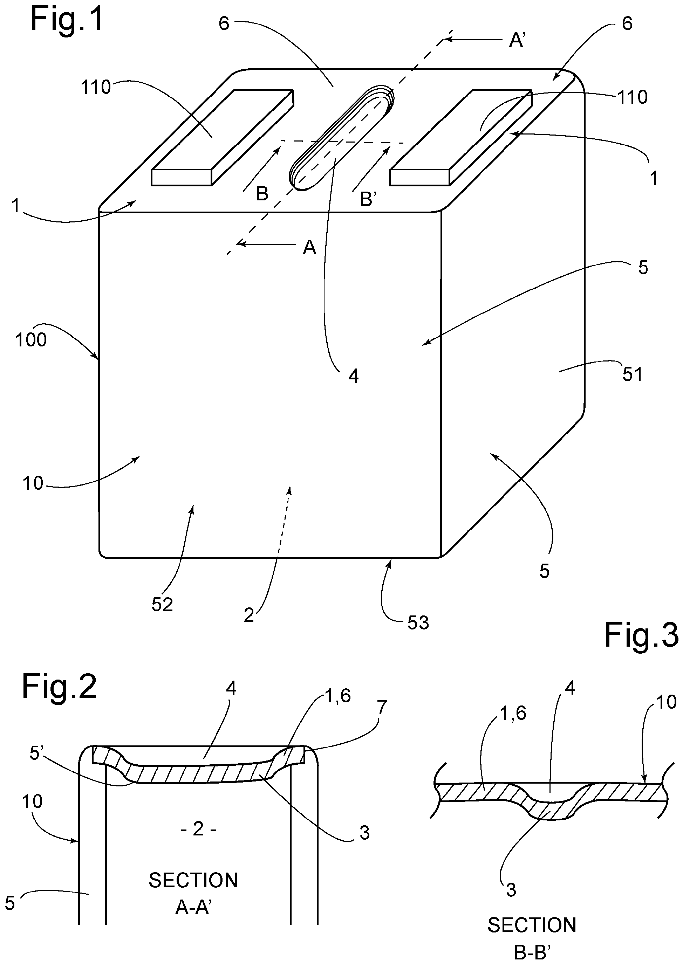

With reference to figure **1****,** a body of a prismatic battery cell comprises a stack of electrodes (not illustrated), which is a repetitive arrangement of layers composed of a positive electrode, a separator, a negative electrode, and a separator. The positive electrodes connected to each other form a positive terminal **110,** and the negative electrodes connected to each other form a negative terminal **110.**

The battery cell **100** comprises at least one stack of electrodes and two current collectors, one of the current collectors being connected to the cathodes of the stack of electrodes and the other current collector being connected to the anodes of the stack of electrodes, the battery cell **100** having a casing **10** in which the stack of electrodes is housed.

The casing **10** comprises a can **5** delimiting, at least in part, an inner space **2** of the casing **10,** said casing **10** having a top cover **6** to close the inner space **2** of the casing **10** together with the can **5.**

The can **5** thus has an opening **'5'** allowing access to the inner space **2** in order to be able to deposit elements inside the battery cell **100,** in particular the stack(s) of electrodes, the opening **'5'** then being closed by the top cover **6.**

The can **5** has five sides, each side being formed of a generally rectangular plate made of sheet metal. The top cover **6** is also in the form of a generally rectangular plate **1** made of sheet metal. The metal for the plates of the casing is for example aluminium, or more generally aluminium-based.

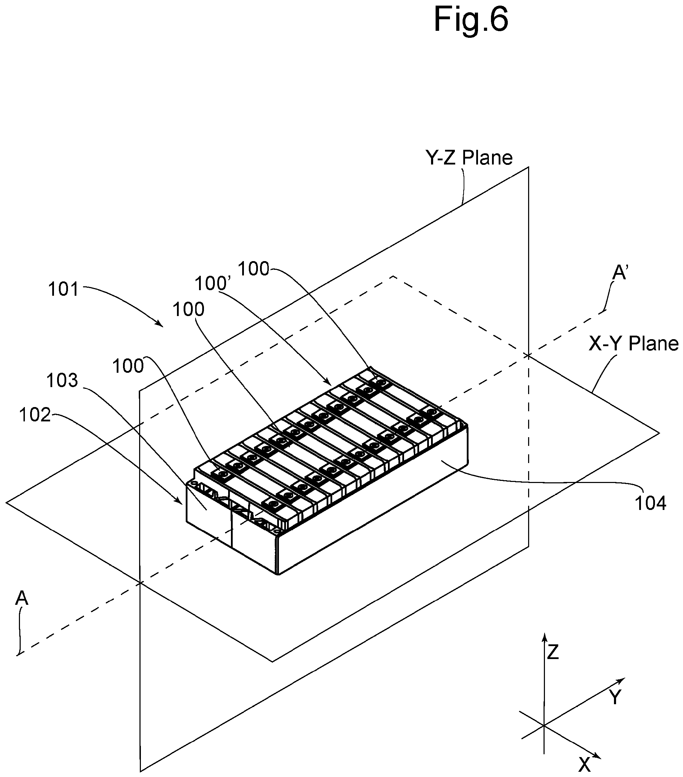

In this embodiment, the can **5** of the casing **10** comprises two end plates **51** and two lateral plates **52** connecting the end plates **51** at both ends. The end plates **51** and the lateral plates **52** are, for example, joined by welding. The can **5** of the casing **10** typically has a rectangular box shape, delimiting a rectangular parallelepiped housing with a top opening **'5',** the end plates **51** being shorter in length than the lateral plates **52.** In other words, the two end plates **51** extend in vertical planes substantially parallel to each other (and parallel to the plane **X-Z** in figure 6), and the two lateral plates **52** extend in vertical planes substantially parallel to each other (and parallel to the plane **Y-Z** in figure 6) and perpendicular to the extension planes of the end plates **51.** The end plates **51** and the lateral plates **52** are connected with a bottom plate **53** which closes a bottom opening, the bottom plate **53** extending in a horizontal plane substantially perpendicular to the planes of the end plates **51** and the lateral plates **52.**

The top cover **6** is also in the form of a plate which, in a closed position of the casing **10** of the battery cell **100,** is positioned so that it extends in a horizontal plane substantially parallel to the plane of the bottom plate **53.**

The assembly formed by the can **5** and the top cover **6** thus constitutes the casing **10** closing the inner space **2** for housing a stack of electrodes, such a casing **10** having a generally prismatic shape for a prismatic battery cell **100.**

According to the invention, at least one plate **1** made of sheet metal has at least one stamped bead **3** protruding towards the inner space **2** of the casing **10.**

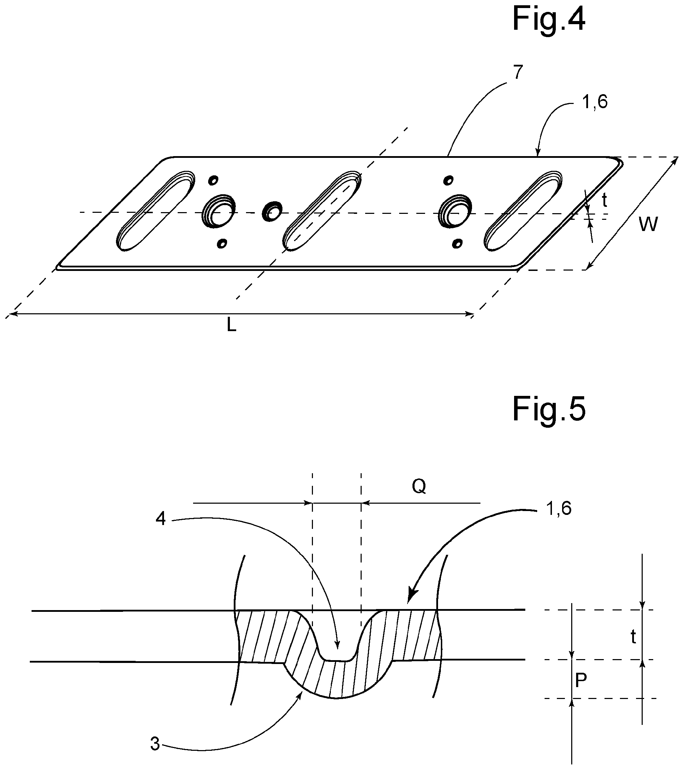

Such a plate **1** consists of the top cover **6,** having (see figures 4 and 5):
- a length having a value **L,**
- a width having a value **W;** and
- a thickness having a value **t;**
such that a slenderness ratio of the plate **1,** that is to say the top cover **6** in this embodiment, is defined by the ratio W/t, said slenderness ratio being greater than 10.

In this embodiment, one of the casing plates reinforced by a stamped bead comprises the top cover **6.** In a general way, this could be any plate of the exterior packaging part or component of the battery cell **100.** However, the most critical plate/face requiring said stamped bead(s) **3** is in practice the top cover **6** and the bottom plate **53** of the battery cells **100** assembled in a module **101** and/or pack of a battery system for an electric vehicle.

The term "stamping", also known as "pressing", is the process of placing a flat sheet, preferably flat sheet metal, into a stamping press where a tool and die surface forms the metal into a net shape. Such a bead **3** obtained by said stamping process, provides the plate **1,** in this case the top cover **6,** with rigidity and resistance to bending without adding material. Moreover, such a process is particularly simple to implement and can be carried out in hidden time within the production line without needing to slow down the manufacturing process.

A plate **1,** such as the top cover **6,** having a slenderness ratio greater than **10** corresponds to a plate **1** whose thickness is relatively thin compared to its width. Such a characteristic induces a certain intrinsic flexibility of the plate **1.** As the length **L** of the plate **1** is greater than its width **W,** if such a ratio based on the width **W** of the plate **1** is greater than a predetermined value, then so is a similar ratio based on the length **L.** If the plate is not rectangular, its width **W** corresponds to the minimum distance between two opposite points on its peripheral edge **7.** Preferably, and in other words, the plate **1** is delimited by a peripheral edge **7,** the minimum distance between two points of this peripheral edge **7** being greater than at least 10 times the value of an average thickness of the associated plate **1.** Such a plate **1,** such as the top cover **6,** preferably each plate of the casing **10,** has an average thickness greater than or equal to 1 mm, still preferably greater than or equal to 2 mm and/or less than or equal to 5 mm, and still preferably less than or equal to 4 mm.

Both the stamped bead **3** on the top cover **6** and the associated recess **4** on the opposite face, facing outer space **2,** extend rectilinearly. Furthermore, the stamped bead **3** on the top cover **6** crosses a centerline **C** of the width **W** of the plate **1** and forms a recess **4** facing away from the inner space **2** of the casing **100.**

The associated recess **4** has an average width value **Q** measured at the centerline C of the width **W** of the top cover **6.** Preferably, to ensure resilience, a satisfactory ratio between an average recess width and the average thickness of the plate is required, said average width value **Q** is greater than **0.3t** and less than **3t.**

In a general way, said average width value **Q** is greater than 0.3**t,** preferably greater than or equal to 0.5**t,** and less than 3**t.**

The bending strength of the plate **1,** namely the top cover **6,** was found to be further enhanced with the stamped bead **3** having a height value **P** greater than 0.3**t**, and less than 3**t.** In a general way, said average width value **P** is greater than 0.3t, preferably greater than or equal to 0.5**t** and less than 3**t,** preferably less than or equal to 3**t.**

In this embodiment, the width **W** of the recess **4,** the height **P** of the stamped bead 3 and the depth of the recess **4,** are each constant. Such a configuration provides a simple and easy to implement structure while guaranteeing improved resistance.

As can be seen in Figure 1, in particular, the stamped bead **3** and the associated recess **4** extend parallel to a width direction of the plate **1,** i.e. transversely to the plate **1** formed by the top cover **6.** A straight or rectilinear shape parallel to a prismatic cell's width direction would be more effective, but it is not limited to being straight only; it could be curved or any shape. But, in general, in a preferred embodiment, the groove(s), formed by the stamped bead **3** and the associated recess **4,** is arranged in a symmetric geometry to the centre lines of the length and/or, preferably and, of the width of a battery cell **100,** considering the battery cells **100** usually are in a symmetric shape to both centre lines of the length and width.

On the plate **1,** having at least one of said stamped beads **3,** here at least the top cover **6,** any part of the recess resides within a predetermined value from a centre-line of a length of the plate **1,** said predetermined value being less than or equal to 30% of the value of the length **L** of the plate **1** along a length direction, in one direction or the other, still preferably less than or equal to 20%.

Similarly, any part of the bead **3** and the recess **4** resides within a predetermined value from a centre-line of a width of the plate **1,** said predetermined value being less than or equal to 30% of the value of the width **W** of the plate **1** along a width direction, in one direction or the other, still preferably less than or equal to 20%.

With reference to figure **6****,** a battery module **101** comprises a cage **102** and a battery cell **100** array **100'** held within said cage **101.** The cage **101** comprises two end plates **103** and two lateral plates **104** connecting the end plates **103** at both ends. The end plates **103** and the lateral plates **104** are, for example, joined by welding. The cage **101** typically has a rectangular box shape, delimiting a rectangular parallelepiped housing, the end plates **103** being shorter in length than the lateral plates **104.** In other words, the two end plates **103** extend in vertical planes substantially parallel to each other (and parallel to the plane **X-Z** in figure 6), and the two lateral plates **104** extend in vertical planes substantially parallel to each other (and parallel to the plane **Y-Z** in figure 6) and perpendicular to the extension planes of the end plates **104.**

The battery cell array **100'** is arranged within the housing of the cage **101** and comprises several battery cells **100** stacked along a longitudinal direction **A,** several thermal insulation pads, and several frames. Preferably, the battery cells **100** array **100'** further comprises two electrical insulation sheets (not illustrated). The longitudinal direction **A** extends along the axis **Y** in figure 6. The battery cells **100** are typically (but not limited to) prismatic battery cells. The battery cells **100** form a stack of battery cells **100,** each electrical insulation sheet **20** being arranged at a respective end of the stack of battery cells **100.** The thermal insulation pads and the frames are inserted between the battery cells **100** and separate the battery cells **100** from each other in the longitudinal direction **A.** In other words, each set formed of a frame and a thermal insulation pad separates two battery cells **100** from each other in the longitudinal direction **A.** The number of frames is, therefore, equal to the number of thermal insulation pads.

The two end plates **103** of the cage **102** enclose the battery cells **100** array in the longitudinal direction **A** (the two lateral plates **104** enclosing the battery cells **100** array in the direction extending along the **A** axis in figure 6), each end plate **103** covering a respective electrical insulation sheet.

Naturally, the present invention, as set forth, is given by way of example. It is understood that those skilled in the art may be able to carry out different variants of the invention without going beyond the scope of the invention.

For example, the manufacture of the stamped bead **3,** dedicated solely to a reinforcing function, has been described here. It is understood that such a groove, formed by a stamped bead **3** and an associated recess **4** assembly, can be used to form an already existing element of the plate **1.** In fact, and in general, it could be an additional groove or multiple grooves only to increase the flexural stiffness of the exterior packaging part/component of the battery cell **100,** i.e., the casing **10.** However, depending on the design, it may have some functional provisions within the groove, and it may become a combined groove with other functions, not only for stiffness enhancement. In an embodiment, the top cover has at least one break line of a gas venting area: said break line could be combined with the stamped bead **3** in principle, provided it works for both gas venting and enhancement of stiffness simultaneously. Said gas venting area can also be delimited by such a groove with a stamped bead **3.**

It is emphasised that all the features, as apparent to a person skilled in the art from the present description, drawings and attached claims, even if said features have only been described in relation to certain other features, both individually and in any combination, may be combined with other features or groups of features disclosed herein, insofar as this has not been expressly ruled out or technical circumstances make such combinations impossible or meaningless.

## Claims

1. A casing (10) for a battery cell (100) having at least one plate (1) made of sheet metal closing an inner space (2) of the casing (10) for housing a stack of electrodes, wherein the plate (1) has a length (L), a width having a value (W) and a thickness having a value (t) such that a slenderness ratio of the plate W/t is greater than 10, wherein the plate (1) has at least one stamped bead (3) protruding towards the inner space (2) of the casing (10), which crosses a centerline (C) of the width (W) of the plate (1) and forms a recess (4) facing away from the inner space (2) of the casing (100), the recess (4) having an average width value Q, measured at the centerline (C) of the width (W) of the plate (1), **characterised in that** the average width value Q is greater than 0.3t and less than 3t.

2. The casing (10) according to claim 1, **characterized in that** the width (W) of the recess (4) is constant.

3. The casing (10) according to claim 1 or 2, **characterised in that** the stamped bead (3) has a height value (P) greater than 0.3t, and less than 3t, the height (P) of the stamped bead (3) being preferably constant.

4. The casing (10) according to any of the preceding claims, **characterized in that** the depth of the recess (4) is constant.

5. The casing (10) according to any of the preceding claims, **characterized in that** said casing (10) has a symmetric shape to the centre line of the width (W).

6. The casing (10) according to any one of the preceding claims, **characterised in that** the stamped bead (3) and the recess (4) extends rectilinearly.

7. The casing (10) according to any one of the preceding claims, **characterised in that** the stamped bead (3) and the recess (4) extends parallel to a width direction of the plate (1).

8. The casing (10) according to any of the preceding claims, **characterised in that** it has a prismatic shape for a prismatic battery cell (100).

9. The casing (10) according to claim 8, **characterized in that** at least the plate (1) having the stamped bead (3), preferably each plate (1) of the casing (10), has a rectangular shape.

10. The casing (10) according to any of the preceding claims, **characterised in that** it comprises a can (5) delimiting at least in part the inner space (2) of the casing (10), said casing (10) having a top cover (6) to close the inner space (2) of the casing (10) together with the can (5), at least one plate (1) having at least the stamped bead (3) being the top cover (6).

11. The casing (10) according to any of the preceding claims, **characterised in that** at least the plate (1) having the stamped bead (3), preferably each plate of the casing (10), has an average thickness greater than or equal to 1 mm, still preferably greater than or equal to 2 mm and/or less than or equal to 5 mm, and still preferably less than or equal to 4 mm.

12. The casing (10) according to any of the preceding claims, **characterised in that** at least the plate (1) having the stamped bead (3), preferably each plate of the casing (10), is delimited by a peripheral edge (7), the minimum distance between two points of this peripheral edge (7) being greater than or equal to at least 10 times the value of an average thickness of the associated plate (1).

13. The casing (10) according to any of the preceding claims, **characterised in that** the stamped bead (3) is in a symmetric geometry to the centre lines of the length and/or, preferably and, of the width of the plate (1).

14. The casing (10) according to any of the preceding claims, **characterised in that**, on the plate (1) having at least one of said stamped beads (3),
- any part of the bead (3) and the recess (4) resides within a predetermined value from a centre-line of a length of the plate (1), said predetermined value being less than or equal to 30%, preferably less than or equal to 20%, of the value of the length (L) of the plate (1) along a length direction, and/or
- any part of the bead (3) and the recess (4) resides within a predetermined value from a centre-line of a width of the plate (1), said predetermined value being less than or equal to 30%, preferably less than or equal to 20%, of the value of the width (W) of the plate (1) along a width direction,

15. A battery cell (100) comprising at least one stack of electrodes and two current collectors, one of the current collectors being connected to the cathodes of the stack of electrodes and the other current collector being connected to the anodes of the stack of electrodes, the battery cell (100) having a casing (10) according to claims 1 to 14 in which the stack of electrodes is housed.

16. A battery module (101) **characterised in that** it comprises a cage (102) and a battery cells (100) array held within said cage (101), the battery cells (100) array having at least one, preferably all, of the battery cells (100) according to claim 15.

17. A battery pack **characterised in that** it comprises at least one battery module (101) according to claim 16.
